# EUROPÄISCHE PATENTSCHRIFT

(11) **EP 1 742 431 B1**
(45) Veröffentlichungstag und Bekanntmachung des Hinweises auf die Patenterteilung: **15.08.2012**
(21) Anmeldenummer: 06011913.8
(22) Anmeldetag: 09.06.2006
(51) Int. Cl.: H04L 12/58

(54) **Selektive Push-Zustellung von elektronischen Nachrichten**
Selective push delivery of electronic messages
Distribution sélective push de messages électroniques

(30) Priorität: 07.07.2005 DE 102005031741
(43) Veröffentlichungstag der Anmeldung: 10.01.2007
(73) Patentinhaber: Deutsche Telekom AG, 53113 Bonn (DE)
(72) Erfinder: Schepp, Ralph, 53111 Bonn (DE)
(74) Vertreter: Braun-Dullaeus, Karl-Ulrich

(56) Entgegenhaltungen:
- WO-A1-2004/017583
- US-A- 5 930 479
- US-A1- 2005 125 667

## Beschreibung

Die Erfindung betrifft ein Verfahren zur sofortigen Zustellung ("Push") einer elektronischen Nachricht (Email) auf ein Endgerät eines ersten Nutzers, wobei die Email über ein Telekommunikationsnetz, insbesondere über das Internet, von einem zweiten Nutzer an einen für den ersten Nutzer zugänglichen Emailserver übermittelt wird, wobei die Email von dem Email-Server zur sofortigen Zustellung an das Endgerät des ersten Nutzers gepusht wird. Die Erfindung betrifft ebenso ein System zur Umsetzung des Verfahrens.

Generell sind Verfahren zur Versendung von Emails seit langem bekannt. So werden mit der Empfängeradresse versehene Emails meist vom Computer des Nutzers zunächst an den speziellen Email-Server gesendet, auf den der Computer des Empfängers mit zyklischen Abfragen zugreift, um sich vorhandene Emails nach dem "Pull"-Prinzip abzuholen. Aus dem US 5,930,479 ist ein solcher Dienst bekannt, der sich zur Vermeidung von unerwünschten Nachrichten zwischen Mailserver und Engerät geschalteter "personal channel agents" bedient, die eine verschlüsselte Kommunikation ermöglichen.

Neben diesen "Pull"-Datendiensten sind seit einiger Zeit die oben genannten "Push"-Dienste beispielsweise aus der WO 2004/017583 A1 bekannt, die eingegangene Emails unaufgefordert zur unmittelbaren Darstellung an ein entsprechendes Endgerät des Empfängers senden und dort zumindest mit einer Kurznachricht auf dem Display ausgeben. Solche "Push"-Dienste können die Email beispielsweise über Short-Message-Service (SMS), Multimedia-Messaging-Service (MMS) oder Wireless-application-Protokoll (WAP) an das mobile Endgerät des Empfängers senden. Neben des für die "normale" Verteilung der Emails benutzte Internet, bedienen sich diese Dienste somit noch eines zweiten Kommünikationsnetzes.

Die zur Verfügung stehenden "Push"-Dienste haben jedoch wegen der starken Zunahme unerwünschter "SPAM"- und "Junk"- (Ramsch) Emails an Attraktivität verloren. Das liegt insbesondere daran, dass der Empfänger, der schließlich für den besonderen Dienst bezahlen muss, nicht bereit ist, für solch unerwünschte Emails eine Gebühr zu entrichten. Aber nicht nur im Falle solcher Emails möchte der Nutzer den kostenträchtigen "Push" vermeiden; mitunter hält er es auch für unnötig, manche an ihn gesendete "vernünftige" Email auf sein mobiles Endgerät gepusht zu bekommen.

Um einen solchen Automatismus bei "Push"-Diensten zu vermeiden, besteht für den Nutzer die Möglichkeit, in gewissem Umfang Regeln zur Weiterleitung von Emails an den "Push"-Dienst vorzugeben. Damit kann die Zahl der unerwünschten Mails in gewissen Grenzen gehalten werden, doch ist die Pflege dieser Regeln, die auf dem Mailserver hinterlegt werden, aufwendig und entsprechend wenig benutzerfreundlich.

Die Aufgabe der vorliegenden Erfindung besteht nunmehr darin, ein Verfahren und eine Vorrichtung zur sofortigen Email Zustellung, insbesondere einen "Push"-Dienst, zu schaffen, wobei sich Verfahren und Vorrichtung mit einfachen Mitteln kostengünstig umsetzen lassen, einen hohen Nutzungskomfort gewährleisten und eine selektive Versendung von Emails gewährleisten.

Diese Aufgabe wird durch das Verfahren nach Anspruch 1 und das System nach Anspruch 11 gelöst. Vorteilhafte Ausführungsformen sind in den jeweiligen Unteransprüchen genannt.

Der wesentliche Grundgedanke der Erfindung liegt darin, dass ein Nutzer, der eine Email ("Hinmail") versendet, diese mit einem elektronisch identifizierbaren Zeichen ("Identifier") als für ihn bevorzugt kennzeichnen kann. Dabei eröffnet der Identifier gewissermaßen die Möglichkeit zum "Push" einer von dem Empfänger der Hinmail an den ersten Nutzer gesendeten Rückmail. Dieser erfindungsgemäße Gedanke wird dadurch umgesetzt, dass zunächst der erste Nutzer dem zweiten Nutzer eine Hinmail schickt, wobei dieser Hinmail ein der ldentifier zugeordnet wird. Eine nachfolgend von dem zweiten Nutzer an den ersten Nutzer zurück gesendete Rückmail wird mit dem Identifier in Verbindung gebracht und bei Identifikation des Identifiers, also wenn Rückmail und Identifier korrespondieren, an das Endgerät des ersten Nutzers gepusht.

Dabei sei schon an der Stelle darauf hingewiesen, dass die Rückmail nicht unbedingt eine über die Antwortfunktion eines Email Clients geschriebene Antwortmail sein muss. Es kann sich auch um eine diesbezüglich von der Hinmail unabhängige Email handeln. Das ermöglicht mehrere Ausführungsformen der Erfindung, von denen nachfolgend zwei besonders vorteilhafte dargestellt werden:

Im Prinzip wird nach der ersten Ausführungsform der Identifier in eine Rückmail bzw. Antwortmail übernommen, so dass diese als gewünscht erkannt und selektiv gepusht werden kann. In dieser Ausführungsform werden nur die unmittelbar auf die Hinmail vermittels der Antwortfunktion geschriebenen Antwortmails gepusht. Diese stehen somit im unmittelbaren Zusammenhang mit der Hinmail. Nach der zweiten Ausführungsform ist die Verwendung der Antwortfunktion nicht nötig. Dabei wird der Empfänger der Hinmail gewissermaßen für das Versenden von zu pushenden Emails freigeschaltet. Dazu ist es vorteilhaft, beim Versenden der Hinmail auf dem Mail-Server eine Regel zu hinterlegen, die dafür sorgt, dass die nächste Rückmail des zweiten Nutzer gepusht wird. Diese Regel erzeugt der Email-Server, sobald er den Identifier der Hinmail registriert. Bei dieser zweiten Ausführungsform muss die Antwortmail nicht in unmittelbarem Zusammenhang mit der Hinmail stehen.

In der ersten Ausführungsform wird der Identifier in identischer oder in einer für den ersten Nutzer nachvollziehbaren Form in die Antwortmail übernommen, wobei auf der Seite des ersten Nutzers, also insbesondere auf dessen Email Server, der Identifier der Antwortmail überprüft wird. Bei Identifikation des richtigen Identifiers wird die Antwortmail unmittelbar auf das Endgerät des ersten Nutzers gepusht. Diese Ausführungsform kann derart umgesetzt werden, dass auf dem Mail Server mit dem Versenden der Hinmail eine Information betreffend den Identifier hinterlegt wird, wonach der Mail-Server anhand der Information die Richtigkeit des Identifiers der Antwortmail feststellen kann. Bei dieser Ausführungsform ist es vorteilhaft, wenn die Hinmail und damit auch die Antwortmail mit einem für den Empfänger unsichtbaren Identifier, insbesondere einem digitalen Wasserzeichen, versehen wird.

In der zweiten Ausführungsform wird die Emailadresse des zweiten Nutzers im Identifier kodiert und nach dem Versenden der Hinmail auf dem Email Server hinterlegt. Kommt dann die Rückmail auf dem Email Server an, kann diese anhand der hinterlegten Adresse als zu pushend identifiziert werden. Damit wird die Rückmail auf dem Email Server mit der im Identifier vorhandenen Adresse in Verbindung gebracht. Über den Identifier kann auf dem Email Server eine Push-Regel aktiviert werden, die gewissermaßen eine Filterfunktion für die an den ersten Nutzer gesendeten Emails realisiert. Nun wird jede für den ersten Nutzer auf dem Email Server eingehende Email durch einen Abgleich auf Übereinstimmung der im Identifier kodierten Emailadresse untersucht. Nur wenn die eingehende Email als eine gewünschte Rückmail des zweiten oder eines anderen "scharf" geschalteten Nutzers identifiziert werden kann, wird sie auf das Endgerät des ersten Nutzers gepusht.

Dabei ist es vorteilhaft, wenn die hinterlegte Regel nach dem einmaligen Push automatisch vom Email-Server gelöscht wird, so dass der erste Nutzer nur die eine gewünschte Rückmail als Reaktion des zweiten Nutzers per push erhält. Die auf dem Server hinterlegte Regel kann somit lauten: "nächste Email vom Hinmail-Empfänger auf das Handy pushen, dann Push-Regel löschen". Um zu vermeiden, dass beide Nutzer annähernd gleichzeitig eine Mail versenden und diese dann gepusht wird, kann ein Verzögerungsmechanismus in Form einer Regel auf dem Server hinterlegt werden. Dieser könnte lauten "warte 3 Sekunden, dann erst Push-Modus scharf schalten". Zudem kann ein Zeitfenster von z.B. 48 Stunden eingestellt werden, in dessen Rahmen die Rückantwort gepusht werden soll, so kann sichergestellt werden, dass Emails, die erst beträchtlich später eintreffen, nicht mehr gepusht werden.

Bei beiden Ausführungsformen entscheidet somit der Nutzer beim Absenden einer Email selber, inwieweit ihm der Adressat und/oder die Antwort auf seine Hinmail wichtig genug ist, um die Rück- oder Antwortmail gebührenpflichtig per "Push"-Mail, die insbesondere mittels MMS, SMS oder WAP, GPRS, UMTS auf sein Endgerät, insbesondere sein Handy geschickt zu bekommen. Der "Push" erfolgt somit erst nach erfolgter Identifikation des richtigen Identifiers. Dabei ist die Erfindung nicht auf Push Dienste für Mobiltelephone oder dergleichen beschränkt. Der Identifier kann auch im normalen Email Verkehr vorteilhaft zur Filterung verwendet werden. So können identifizierte Rück- oder Antwortmail auch auf anderen Geräten, beispielsweise auf Desktopcomputern, anders behandelt werden, insbesondere indem sie direkt geöffnet und auf dem Display dargestellt werden oder in ein extra angelegtes "spamfreies" Verzeichnis geschickt werden. Wenn der Push Dienst die Email auf ein mobiles Endgerät schickt, wird ein zweites Kommunikationsnetz als Medium, insbesondere ein GSM-Netz, benötigt, das die Verbindung vom Mail Server zum mobiles Endgerät bereitstellt.

Ein wichtiges Merkmal des erfindungsgemäßen Identifiers ist, dass er nach dem Versandt vom zweiten Nutzer oder einem Dritten nicht unkontrolliert veränderbar ist und nicht für spätere Zwecke aus der ursprünglichen Hinmail herauskopiert werden kann. Dabei ist es unerheblich, ob der zweiten Nutzer als der Absender der Antwortmail den Identifier auf der Hinmail erkennt oder überhaupt von dessen Existenz weiß. Es kann allerdings vorteilhaft sein, die Hinmail und damit auch die Rück- oder Antwortmail in einer für den Empfänger unkenntlichen Art mit dem Identifier zu versehen.

Der Vorteil des erfindungsgemäßen Identifiers liegt auf der Hand: So können auf einfachstem Wege, nämlich insbesondere durch einfaches Anklicken eines im Email Client vorgesehen Buttons (Icons), die ausgehenden Emails markiert und damit die entsprechenden Rück- oder Antwortmails für den Push gewissermaßen "scharf" geschaltet werden. Durch Anwahl des Icons kann der Identifier automatisch fälschungssicher und kopiergeschützt an der Hinmail angebracht werden.

Solchermaßen identifizierte Rück- oder Antwortmails können dann einerseits direkt an den "Push"-Dienst gesendet und insbesondere auf dem Handy des ersten Nutzers dargestellt werden. Andererseits kann eine Kopie der Rück- oder Antwortmail auf den Desktop des ersten Nutzers gesendet werden. Auf diese Weise kann der Empfang von Spam über den kostenträchtigen Push-Dienst effektiv vermieden werden, so dass diese Dienste für den Nutzer insofern wieder attraktiver werden, als sie von unnötigen und ärgerlichen Kosten befreit sind.

Besonders vorteilhaft ist es, wenn das Modul zur Anbringung des Identifiers dezentral auf dem für den Nutzer zugänglichen Computer läuft und nicht auf einem vom Nutzer nicht kontrollierbaren Mail Server installiert ist. Dieses Programm kann sich zur Anbringung des Identifiers individueller Parameter des Computers bedienen, die es mit Zufallszahlen modifiziert. So kann sich der Nutzer sicher sein, dass er der "Herr" über den Identifier ist und dass dieser nicht gefälscht werden kann. Nach dem Versenden der Hinmail wird die Information über den Identifier vorteilhafterweise auf dem Mailserver hinterlegt, so dass der "Push" der Rückmail schon von dieser Stelle aus initiiert werden kann. Dabei kann der "Push" der Rückmail alternativ oder ergänzend zu der Ausgabe der Rückmail über den Mail Client des ersten Nutzers erfolgen, der sich die eingegangenen Emails über einen "Pull" Dienst aus der Mailbox holt.

Wie schon angedeutet, ist es besonders vorteilhaft, wenn das Verfahren innerhalb des Anwenderprogramms, beispielsweise in MS-Outlook, umgesetzt wird, das als Mail-Client auf dem Computer des Nutzers läuft. Dazu kann dem Nutzer ein Icon auf der Symbolleiste zur Verfügung gestellt werden, das er, wie es heute schon von der Kennzeichnung einer Email mit einem gewissen Wichtigkeitsgrad bekannt ist, anklickt und damit automatisch seine Email mit dem erfindungsgemäßen Identifier versieht.

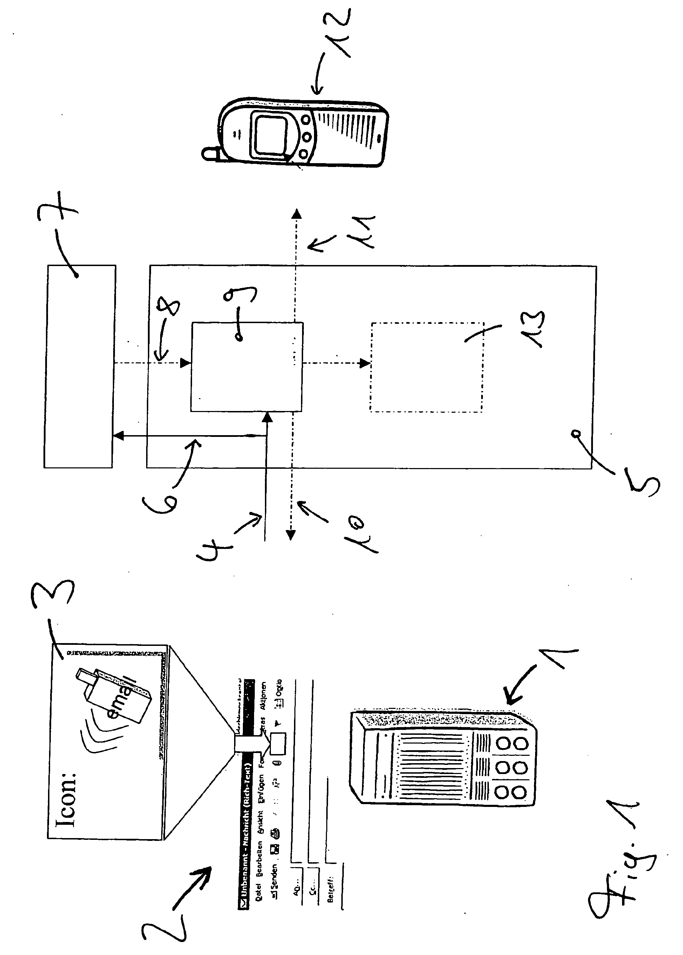

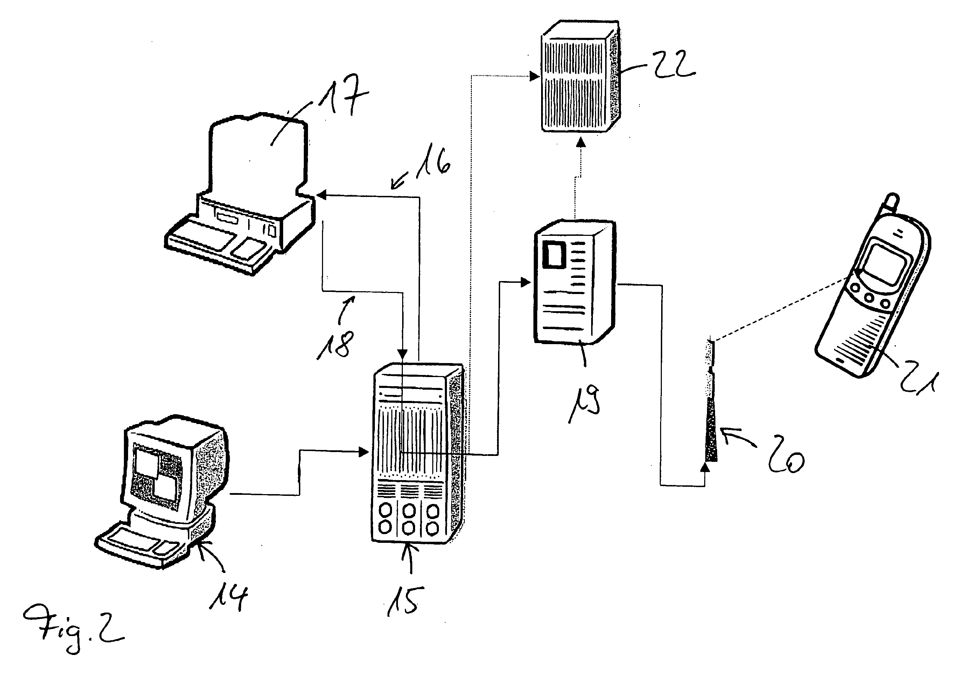

Das erfindungsgemäße Verfahren, das sich im Prinzip als eine Art Fall zu Fall basierte Umleitung oder Konvertierung von Emails umschreiben lässt, und die entsprechende Vorrichtung werden nachfolgend anhand der Figuren 1 und 2 näher beschrieben. Es zeigen:
- **Fig. 1**: die erfindungsgemäße Mail-Server-Funktion und
- **Fig. 2**: die Gesamtarchitektur des Systems.

Zunächst wird die entsprechende Software, wenn sie nicht schon Teil des Anwenderprogramms (Mail Clients) ist, einmalig auf dem Computer 1 des ersten Nutzers installiert. Über den Texteditor des Mail Client 2 wird dann in bekannter Weise die Email geschrieben und vor dem Versenden der Email das Icon 3 zur Anbringung des Identifiers ausgewählt. Dadurch wird festgelegt, dass die von dem Adressaten der Hinmail abgeschickte Rück- oder Antwortmail über einen "Push"-Dienst insbesondere auf das Handy des ersten Nutzers geschickt wird. Der Mail Client 2 versendet dann die Email über das Internet (Weg 4) an den Mail Server 5. Gleichzeitig aktiviert die Hinmail ein Konvertierungsmodul 9 auf dem Mail Server 5. Dabei geht das Markieren gewissermaßen einher mit der Aktivierung des Moduls 9, das die Koordinaten x (IP-Adresse des Empfängers), y (Posteingang) und z (z.B. SMS Gateway) enthält. Der Mail Server 5 routet die Email entsprechend der Adresse x über den Weg 6 weiter an einen zweiten, dem Empfänger zugeordneten Mail-Server 7.

Über den zweiten Mail-Server 7 erreicht die Email den zweiten Nutzer, der seine Antwortmail auf dem Weg 8 an den ersten Mail-Server 5 zurück sendet. Im Konvertierungsmodul 9 wird die Email identifiziert und einerseits dem Mail-Client in das Postfach gelegt, wo er sie über den Weg 10 abrufen kann. Zusätzlich wird über den Weg 11 ein SMS-Gateway angesprochen, das die Email auf das Handy 12 des ersten Nutzers pusht. Nach dem Push werden durch eine Funktion 13 die Parameter des Konvertierungsmoduls 9 gelöscht.

Falls der zweite Nutzer die Hinmail nicht empfängt, sondern diese als unzustellbar zurückgesendet wird, erkennt das Konvertierungsmodul den Identifier und pusht die entsprechende Nachricht auf das Handy 12 des ersten Nutzers.

Figur 2 zeigt die Gesamtarchitektur des Systems. Dabei ist mit 14 der als Email-Client wirkende Computer des ersten Nutzers dargestellt, der die Email mit dem Identifier und dem Wunsch, die Antwort als SMS auf das Mobiltelephon gepusht zu bekommen, an den ersten Email-Server 15 sendet. In diesem Fall leitet der Email Server 15 die Email auf dem Weg 16 an die IP-Adresse des zweiten Nutzers 17 weiter, der die Email beantwortet und über denselben Server auf den Weg 18 weder in das Postfach legt. Bei entsprechend vorliegendem Identifier wird die Email an ein SMS -Gateway 19 geschickt, das sie über ein entsprechendes Funkdatennetz 20 an das Mobiltelefon 21 sendet, wo sie ausgegeben wird. Die Kostenabrechnung geschieht über ein gesondertes "Billing"-System 22, das seine Information vom Email-Server 15 respektive vom Gateway 19 erhält.

Damit weist das zur Durchführung des Verfahrens geeignete System zunächst ein Telekommunikationsnetz und einen für eine Vielzahl von Endgeräten über das Telekommunikationsnetz zugänglichen Mail Server auf, wobei der Mail Server die Emails verteilt. Auf den Endgeräten sind Email Clients realisiert, die das Schreiben und den Empfang von Emails ermöglichen. Auf dem Mail Server ist ein Modul realisiert, das eine eingehende Email auf die Übereinstimmung mit einem individuellen Identifier untersucht und die Email im Falle einer vorliegenden Übereinstimmung zum sofortigen Empfang an ein Endgerät des in der Email als Empfänger angegebenen Nutzers pusht. Für den Push der Email steht vorteilhafterweise ein zweites Telekommunikationsnetz, insbesondere ein Mobilfunknetz, zur Verfügung, das über den Gateway Server zugänglich ist.

## Patentansprüche

1. Verfahren zur sofortigen Zustellung einer elektronischen Nachricht auf ein Endgerät eines ersten Nutzers, wobei die Email über ein Telekommunikationsnetz, insbesondere über das Internet, von einem zweiten Nutzer an einen für den ersten Nutzer zugänglichen Email-Server (5,15) übermittelt wird, wobei die Email von dem Email-Server (5,15) zur sofortigen Zustellung an das Endgerät des ersten Nutzers gepusht wird,
wobei zunächst der erste Nutzer dem zweiten Nutzer eine Email zusendet, wobei der erste Nutzer diese Email schreibt und vor dem Versender dieser Email das Icon zur Anbringung des elektronsisch identifizierbaren Zeichens auswählt, wobei mit dem Anklicken des Icons automatisch diese Email mit dem elektronisch identifizierbaren Zeichen versehen wird,
dass eine nachfolgend von dem zweiten Nutzer an den ersten Nutzer zurück gesendete Email mit dem Identifier in Verbindung gebracht wird und
dass bei Identifikation des Identifiers die Rückmail an das Endgerät (12,21) des ersten Nutzers gepusht wird.

2. Verfahren nach Anspruch 1,
**dadurch gekennzeichnet,**
**dass** die Rückmail als unmittelbare Antwort auf die Hinmail verschickt wird, wobei die Antwortmail den Identifier in identischer oder in einer für den ersten Nutzer nachvollziehbaren Form übernimmt, wobei der Identifier der Antwortmail auf der Seite des ersten Nutzers überprüft wird und dass die Antwortmail bei Identifikation des richtigen Identifier unmittelbar auf das Endgerät (12,21) des ersten Nutzers gepusht wird.

3. Verfahren nach Anspruch 1 oder 2,
**dadurch gekennzeichnet,**
**dass** die Hinmail und damit auch die Antwortmail mit einem für den Empfänger unsichtbaren Identifier, insbesondere einem digitalen Wasserzeichen, versehen wird.

4. Verfahren nach einem der vorherigen Ansprüche,
**dadurch gekennzeichnet,**
**dass** mit dem Versenden der Hinmail auf dem Email-Server (5,15) eine Information betreffend den Identifier hinterlegt wird, wobei der Email-Server (5,15) anhand der Information die Richtigkeit des Identifiers der Antwortmail feststellt.

5. Verfahren nach Anspruch 1,
**dadurch gekennzeichnet,**
**dass** die Emailadresse des zweiten Nutzers im Identifier kodiert ist, wobei der Identifier in dem Email-Server (5,15), der dem ersten Nutzer zugeordnet ist, hinterlegt wird, wobei jede auf dem Email-Server (5,15) eingehende Email auf die Übereinstimmung der im Identifier kodierten Emailadresse untersucht wird, wobei im Falle der Übereinstimmung die eingehende Email als gewünschte Rückmail auf das Endgerät (12,21) des ersten Nutzers gepusht wird.

6. Verfahren nach einem der vorherigen Ansprüche,
**dadurch gekennzeichnet,**
**dass** der erste Nutzer den Identifier durch Anwahl eines Icons (3), das ihm von dem auf seinem Endgerät (1) realisierten Email Client (2) angeboten wird, vornimmt, wobei der Identifier nach Anwahl des Icons (3) insbesondere fälschungssicher und kopiergeschützt an der Hinmail angebracht wird.

7. Verfahren nach einem der vorherigen Ansprüche,
**dadurch gekennzeichnet,**
**dass** die Hinmail auf einem ersten Endgerät (1,14), insbesondere einem Desktopcomputer, vom ersten Nutzer geschrieben wird und die Rückmail oder die Antwortmail auf ein zweites Endgerät, insbesondere ein Mobiltelephon oder ein PDA (12,21), des ersten Nutzers gepusht wird.

8. Verfahren nach Anspruch 7,
**dadurch gekennzeichnet,**
**dass** ergänzend zum Push der Antwort- oder Rückmail diese in dem dem ersten Nutzer zugeordneten Postfach des Email-Servers (5,15) abgelegt wird, von wo sie über einen "Pull" Dienst insbesondere vom ersten Endgerät (1,14) des ersten Nutzers abrufbar ist.

9. Verfahren nach einem der vorherigen Ansprüche,
**dadurch gekennzeichnet,**
**dass** die Antwortmail über MMS- oder WAP-Push Systeme dem mobilen Endgerät (12,21) des ersten Nutzers zugestellt wird.

10. Verfahren nach einem der vorherigen Ansprüche,
**dadurch gekennzeichnet,**
**dass** der Identifier nach dem Push gelöscht wird.

11. System mit Mitteln zur Durchführung des Verfahrens nach einem der vorherigen Ansprüche, aufweisend ein Telekommunikationsnetz und einen für eine Vielzahl von Endgeräten (1,12,14,17,21) über das Telekommunikationsnetz zugänglichen Email Server (5,7,15) zur Verteilung elektronischer Nachrichten (Emails), wobei auf den Endgeräten (1,12,14,17,21) Email Clients (2) realisiert sind, die das Schreiben und den Empfang von Emails ermöglichen,
wobei der auf dem Endgerät des Nutzers realisierte Email Client (2) dem Nutzer die Auswahl der Funktion zur Anbringung eines Identifier per Befehl vor dem Versenden der Email zur Verfügung stellt, wobei ein auf dem Email Server (5,7,15) realisiertes Modul ausgeführt ist, welcher so ausgestaltet ist, dass es eine eingehende Email auf die Übereinstimmung mit einem individuellen Identifier untersucht und die Email im Falle einer vorliegenden Übereinstimmung zum sofortigen Empfang an ein Endgerät (12,21) des in der Email als Empfänger angegebenen Nutzers sendet.

12. System nach Anspruch 11,
**dadurch gekennzeichnet,**
**dass** für den Push ein zweites Telekommunikationsnetz, insbesondere ein Mobilfunknetz, vorhanden ist, das über einen Gateway Server (19) zugänglich ist.

13. System nach einem der Ansprüche 11 oder 12,
**dadurch gekennzeichnet,**
**dass** das über das zweite Telekommunikationsnetz erreichbare Endgerät ein mobiles Endgerät, insbesondere ein Mobiltelephon, ein Smartphone oder ein PDA, ist.

## Claims

1. A method for instant delivery of an electronic message to a terminal of a first user, wherein the email is transferred via a telecommunications network, in particular via the internet, from a second user to an email server (5, 15) that is accessible to the first user, wherein the email is pushed from the email server (5, 15) onto the terminal of the first user for instant delivery, wherein initially the first user sends an email to the second user, wherein the first user writes said email and selects, before sending said email, the icon for attaching the electronically identifiable sign, and wherein, with the clicking of the icon, said email is automatically marked with the electronically identifiable sign,
an email subsequently sent back from the second user to the first user is connected with the identifier and
that upon identification of the identifier the return mail is pushed onto the terminal (12, 21) of the first user.

2. The method according to claim 1,
**characterised in that** the return mail is sent as an instant reply to the forward mail, wherein the reply mail takes over the identifier in identical form or in a form traceable by the first user, wherein the identifier of the reply mail is checked on the side of the first user,
and **in that** the reply mail is pushed immediately onto the terminal (12, 21) of the first user upon identification of the correct identifier.

3. The method according to claim 1 or 2,
**characterised in that** the forward mail, and as a consequence, the reply mail too, are marked with an identifier that is invisible to the receiver, in particular with a digital watermark.

4. The method according to any one of the preceding claims,
**characterised in that** with the sending of the forward mail, an information regarding the identifier is stored on the email server (5, 15), wherein the email server (5, 15) detects the correctness of the identifier of the reply mail by means of said information.

5. The method according to claim 1,
**characterised in that** the email address of the second user is coded in the identifier, wherein the identifier is stored in the email server (5, 15) that is associated with the first user, wherein every email coming in to the email server (5, 15) is checked for a match with the email address coded in the identifier, wherein, in case of a match, the incoming email is pushed as the requested return mail onto the terminal (12, 21) of the first user.

6. The method according to any one of the preceding claims,
**characterised in that** the first user selects the identifier by selecting an icon (3) that is provided to him by the email client (2) implemented on his terminal (1), wherein the identifier, upon selection of the icon (3), is attached to the forward mail, in particular in a forgery-proof and copy-protected manner.

7. The method according to any one of the preceding claims,
**characterised in that** the forward mail is written by the first user on a first terminal (1, 14), in particular a desktop computer, and the return mail or the reply mail is pushed onto a second terminal, in particular a mobile telephone or a PDA (12, 21), of the first user.

8. The method according to claim 7,
**characterised in that**, in addition to the pushing of the reply or return mail, the mail is stored in the mailbox of the email server (5, 15) that is associated with the first user, from which it is retrievable, in particular by the first terminal (1, 14) of the first user, via a "pull" service.

9. The method according to any one of the preceding claims,
**characterised in that** the reply mail is delivered to the mobile terminal (12, 21) of the first user by means of MMS or WAP push systems.

10. The method according to any one of the preceding claims,
**characterised in that** the identifier is deleted after the pushing.

11. A system having means for the execution of the method according to any one of the preceding claims, including a telecommunications network and an email server (5, 7, 15) for the distribution of electronic messages (emails), the server being accessible to a plurality of terminals (1, 12, 14, 17, 21) via the telecommunications network, wherein email clients (2) are implemented on the terminals (1, 12, 14, 17, 21), the email clients (2) allowing the writing and receiving of emails,
wherein the email client (2) implemented on the terminal of the user allows the user to select a function of attaching an identifier via a command before sending the email, wherein a module implemented on the email server (5, 7, 15) is executed, the module being configured to check an incoming email for a match with an individual identifier and, in case of a match, to send ("push") the email, for instant reception, to a terminal (12, 21) of the user designated as the receiver in the email.

12. The system according to claim 11,
**characterised in that** a second telecommunications network, in a particular a mobile radio network, is present for the push, the network being accessible via a gateway server (19).

13. The system according to any one of claims 11 or 12,
**characterised in that** the terminal reachable via the second telecommunications network is a mobile terminal, in particular a mobile telephone, a Smartphone or a PDA.

## Revendications

1. Procédé de distribution instantanée d'un message électronique sur un terminal d'un premier utilisateur, le courriel étant transmis par un deuxième utilisateur, par l'intermédiaire d'un réseau de télécommunication, notamment par l'intermédiaire de l'internet, à un serveur de messagerie électronique (5, 15) accessible au premier utilisateur, le courriel étant envoyé automatiquement (push) par le serveur de messagerie électronique (5, 15) pour une réception instantanée sur le terminal du premier utilisateur, le premier utilisateur envoyant, dans un premier temps, un courriel au deuxième utilisateur, le premier utilisateur écrivant ce courriel et sélectionnant, avant d'envoyer ledit courriel, l'icône permettant d'ajouter le signe identifiable électroniquement, et un clic sur l'icône entraînant l'ajout automatique du signe identifiable électroniquement audit courriel,
un courriel retourné ensuite par le deuxième utilisateur au premier utilisateur est rattaché à l'identifiant et
en ce qu'en cas d'identification de l'identifiant, le courriel de retour est envoyé automatiquement (distribution « push ») au terminal (12, 21) du premier utilisateur.

2. Procédé selon la revendication 1,
**caractérisé en ce que**
le courriel de retour est envoyé comme réponse instantanée au courriel d'origine, le courriel de réponse reprenant l'identifiant sous une forme identique ou compréhensible pour le premier utilisateur, l'identifiant du courriel de réponse étant vérifié du côté du premier utilisateur, et **en ce qu'**en cas d'identification du bon identifiant, le courriel de réponse est envoyé automatiquement au terminal (12,21) du premier utilisateur.

3. Procédé selon l'une des revendications 1 ou 2,
**caractérisé en ce que** le courriel d'origine et, par conséquent, le courriel de réponse sont munis d'un identifiant, notamment d'un filigrane numérique, invisible pour le destinataire.

4. Procédé selon l'une des revendications précédentes,
**caractérisé en ce que** simultanément à l'envoi du courriel d'origine, une information concernant l'identifiant est stockée sur le serveur de messagerie électronique (5, 15), le serveur de messagerie électronique (5, 15) vérifiant l'exactitude de l'identifiant du courriel de réponse à l'aide de l'information.

5. Procédé selon la revendication 1,
**caractérisé en ce que** l'adresse de courriel du deuxième utilisateur est codé dans l'identifiant, l'identifiant étant stocké dans le serveur de messagerie électronique (5, 15) associé au premier utilisateur, chaque courriel entrant sur le serveur de messagerie électronique (5, 15) étant vérifié par rapport à sa conformité avec l'adresse de courriel codée dans l'identifiant, en cas de conformité, le courriel entrant étant envoyé automatiquement comme courriel de réponse au terminal (12, 21) du premier utilisateur.

6. Procédé selon l'une des revendications précédentes,
**caractérisé en ce que** le premier utilisateur sélectionne l'identifiant en sélectionnant une icône (3) qui lui est proposée par son client de courriel (2) mis en oeuvre sur son terminal (1), l'identifiant étant ajouté, notamment de manière infalsifiable et protégée contre la copie, au courriel d'origine après la sélection de l'icône (3).

7. Procédé selon l'une des revendications précédentes,
**caractérisé en ce que** le courriel d'origine est écrit sur un premier terminal (1, 14), notamment un ordinateur de bureau, par le premier utilisateur, et **en ce que** le courriel de retour ou le courriel de réponse est envoyé automatiquement à un deuxième terminal, notamment un téléphone mobile ou un PDA (12, 21) du premier utilisateur.

8. Procédé selon la revendication 7,
**caractérisé en ce que**, en plus d'être envoyé automatiquement (distribution « push »), le courriel de réponse ou de retour est stocké dans une boîte postale du serveur de messagerie électronique (5, 15) associé au premier utilisateur où il peut être récupéré par l'intermédiaire d'un service « pull », notamment par le premier terminal (1, 14) du premier utilisateur.

9. Procédé selon l'une des revendications précédentes,
**caractérisé en ce que** le courriel de réponse est distribué au terminal (12, 21) du premier utilisateur par l'intermédiaire de systèmes MMS ou WAP-Push.

10. Procédé selon l'une des revendications précédentes,
**caractérisé en ce que** l'identifiant est supprimé après la distribution « push ».

11. Système doté de moyens de réalisation du procédé selon l'une des revendications précédentes, comprenant un réseau de télécommunication et un serveur de messagerie électronique (5, 7, 15) accessible à une pluralité de terminaux (1, 12, 14, 17, 21) par l'intermédiaire du réseau de télécommunication pour la distribution de messages électroniques (courriels), des clients de courriel (2) étant mis en oeuvre sur les terminaux (1, 12, 14, 17, 21) permettant l'écriture et la réception de courriels, le client de courriel (2) mis en oeuvre sur le terminal de l'utilisateur proposant à ce dernier de sélectionner la fonction d'ajout d'un identifiant moyennant commande avant l'envoi du courriel, un module mis en oeuvre sur le serveur de messagerie électronique (5, 7, 15) étant exécuté, ledit module étant conçu de manière à vérifier le. courriel par rapport à sa conformité avec un identifiant individuel et à envoyer automatiquement, en cas de conformité, le courriel à un terminal (12, 21) de l'utilisateur indiqué comme destinataire dans le courriel pour réception instantanée.

12. Système selon la revendication 11,
**caractérisé en ce qu'**un deuxième réseau de télécommunication, notamment un réseau de radiocommunication mobile, est disponible pour la distribution « push » et accessible par l'intermédiaire d'un serveur de passerelle (19).

13. Système selon l'une des revendications 11 ou 12,
**caractérisé en ce que** le terminal accessible par l'intermédiaire du deuxième réseau de télécommunication est un terminal mobile, notamment un téléphone mobile, un smartphone ou un PDA.
